# EUROPEAN PATENT SPECIFICATION

(11) **EP 2 599 716 B1**
(45) Date of publication and mention of the grant of the patent: **10.04.2019**
(21) Application number: 12194894.7
(22) Date of filing: 29.11.2012
(51) Int. Cl.: G01C 25/00, G01C 19/02

(54) **Control moment gyroscope desaturation in aircraft**
Entsättigung eines Steuermoment-Gyroskops in einem Flugzeug
Désaturation de l'actionneur gyroscopique dans un aéronef

(30) Priority: 29.11.2011 US 201113305922
(43) Date of publication of application: 05.06.2013
(73) Proprietor: The Boeing Company, Chicago, IL 60606-1596 (US)
(72) Inventor: Heiberg, Christopher Jan, Sunset Beach, CA California 90742-1415 (US)
(74) Representative: Howson, Richard Giles Bentham

(56) References cited:
- US-A1- 2002 145 077
- US-A1- 2011 153 123
- US-A1- 2011 309 191

## Description

### BACKGROUND

Embodiments of this disclosure generally relate to a control moment gyroscope (CMG), and more particularly, to managing momentum in CMGs using vectored air and/or bleed exhaust from a propulsion system.

CMGs may be commonly employed in aircraft systems for controlling attitude. A generalized CMG may include a housing that supports an inner gimbal assembly (IGA). The IGA may include a rotor having an inertial element, for example, a rotating ring or cylinder coupled to a shaft. Spin bearings may be disposed around the shaft ends to facilitate the rotational movement of the shaft, which may be rotated about a spin axis by a spin motor.

The IGA, in turn, may be rotated about a gimbal axis by a torque module assembly (TMA) mounted to a first end of the CMG housing. To facilitate the rotational movement of the IGA, gimbal bearings may be disposed between the IGA and the CMG housing. A sensor module assembly (SMA) may also be mounted to a second portion of the CMG housing opposite the TMA to deliver electrical signals and power to the IGA. The CMG may include a number of sensors suitable for determining rotational rate and position of the IGA.

A CMG may include a spinning rotor and one or more motorized gimbals that tilt the rotor's angular momentum. A plurality of CMGs may be arranged to form an array. Control of the CMGs in the array may be performed individually or in concert as part of a momentum management system.

Losses and external disturbances may saturate the momentum in a CMG array. The saturated moment may result in loss of effectiveness of the CMG for control that may prevent desired attitude. By desaturating, the CMG momentum may be brought back into nominal values and function properly.

Therefore, it would be desirable to provide a system and method for de-saturating CMGs in aircraft.

According to a first aspect of the invention, there is provided a method for adjusting the control moment gyroscope array, the method as defined in claim 1.

According to a second aspect of the invention, there is provided a control moment gyroscope array as defined in claim 8.

US 2011/0153123 A1 discloses a system and method for attitude maneuver and momentum dumping. The attitude maneuver is performed using nominal wheel control to minimize propellant usage, while applying a momentum management command to the thruster control loop in order for the wheels to accomplish the desired spacecraft maneuver while simultaneously being reset to a de-saturated target state.

US 2002/0145077 A1 discloses a system for directing an object. The system includes a first gyroscope with a first rotating rotor and a second gyroscope with a second rotating rotor. The first gyroscope and the second gyroscope generate a torque.

### SUMMARY

A method for adjusting a control moment gyroscope array on board an aircraft includes receiving a stream and directing the stream to reduce momentum in the control moment gyroscope.

A control moment gyroscope array has saturated angular momentum and a channel receiving airflow for removing the saturated angular momentum.

A system has a control moment gyroscope array and at least one channel vectoring thrust to act on the control moment gyroscope array for desaturating angular momentum.

The features, functions, and advantages may be achieved independently in various embodiments of the disclosure or may be combined in yet other embodiments in so far as they fall within the scope of the claims.

### BRIEF DESCRIPTION OF THE DRAWINGS

Embodiments of the disclosure will become more fully understood from the detailed description and the accompanying drawings, wherein:
**Figure 1** is an array of exemplary control moment gyroscopes (CMGs);
**Figure 2** is a number of illustrative planes formed by rotating the CMGs;
**Figure 3** is an exemplary graph providing momentum vectors of the CMGs;
**Figure 4** is an exemplary graph providing vector sums in a zero momentum state;
**Figure 5** is an exemplary graph providing residual momentum that is non-zero;
**Figure 6** is an illustrative system for mitigating residual momentum in CMGs;
**Figure 7** is an illustrative system for desaturating the CMGs through an airstream;
**Figure 8** is an exemplary block diagram providing generalized components for desaturating the CMGs; and
**Figure 9** is a flow chart providing illustrative processes for desaturating the CMGs.

### DETAILED DESCRIPTION

Control moment gyroscopes (CMGs) may be used for many applications including platform stabilization and vibration control of machinery. CMGs may be commonly used in transportation systems such as spacecraft, aircraft or watercraft. As part of their use, losses and periodic disturbances may result in momentum buildup in spacecraft for which magnetic torque rods or jets are used for desaturation. External disturbances may give rise to the accumulation of residual momentum. The residual momentum may build up to a point where the CMG array becomes saturated. When saturated, the useful torque and momentum transfer provided by the CMGs may be limited.

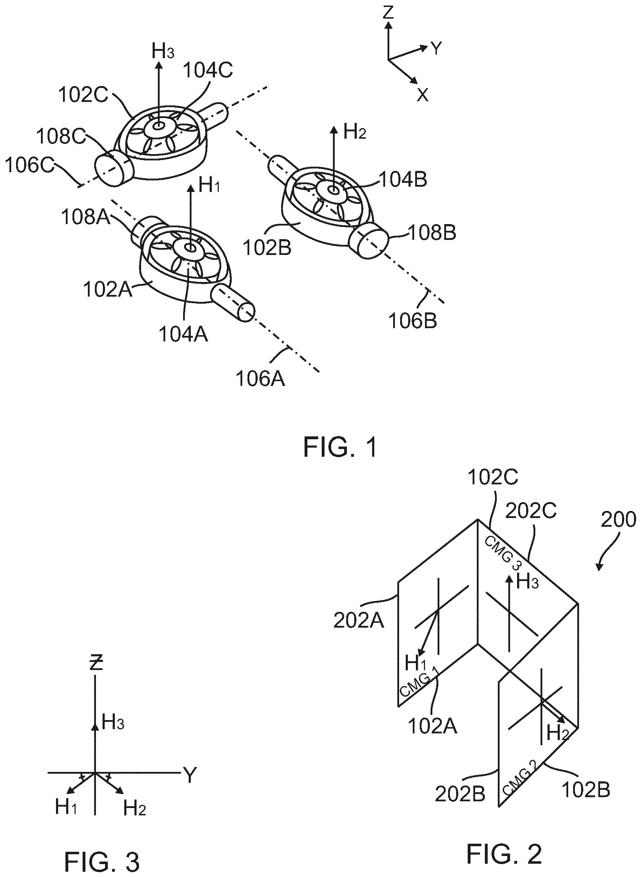

Typically, at least three CMGs may be used to perform three-axis stabilization as CMG momentum may be constrained to an aircraft. In one embodiment, two CMGs in a scissor-pair arrangement to control torque and momentum in one axis may be used. Referring to **Figure 1****,** an array of exemplary CMGs **102A**, **102B** and **102C** (collectively **102**) may be shown. The CMGs **102** may be in a box configuration with their momentum vectors oriented in a nominal +**Z** direction. Each CMG **102** may include an inner gimbal assembly (IGA) **104A**, **104B** and **104C** (collectively **104**) that has a rotational degree of freedom about its gimbal axis **106A**, **106B** and **106C** (collectively **106**)**.**

The IGAs **104** may contain a rotating inertial mass (rotor) that may store angular momentum. This rotor **102** may be suspended in a rotating mount. The angular momentum vectors **H₁**, **H₂** and **H₃** of the IGAs **104** may be processed about their gimbal axis **106** thereby creating control torque. **H₁** may be associated with CMG **102A, H₂** may be associated with CMG **102B** and **H₃** may be associated with CMG **102C.** Gimbal actuation may be accomplished using a mechanism often called a torque module assembly (TMA) **108A**, **108B** and **108C** (collectively **108**)**.** Each momentum vector **H₁**, **H₂** and **H₃** may be oriented in a plane formed by the rotation about each gimbal axis **106.**

While multiple CMGs **102** have been shown, other configurations may exist. CMGs **102** may be single or multiple gimbaled devices. Applications requiring significant levels of torque may tend to have a single-gimbal in order to take advantage of what is often referred to as "torque multiplication". Double gimbal devices may be used where low torque, high momentum may be required. Furthermore fewer or more CMGs **102** may be used that do not have to be constrained to a plane.

In **Figure 2**, a number of illustrative planes **202A, 202B** and **202C** (collectively **202**) formed by rotating each CMG momentum vector **H₁**, **H₂** and **H₃** for the CMGs **102** depicted in **Figure 1** may be shown. The momentum vector **H₁** of CMG **102A** may be provided in plane **202A.** The momentum vector **H₂** of CMG **102B** may be provided in plane **202B,** while the momentum vector **H₃** of CMG **102C** may be provided in plane **202C.** The three planes **202** may form a box configuration **200.**

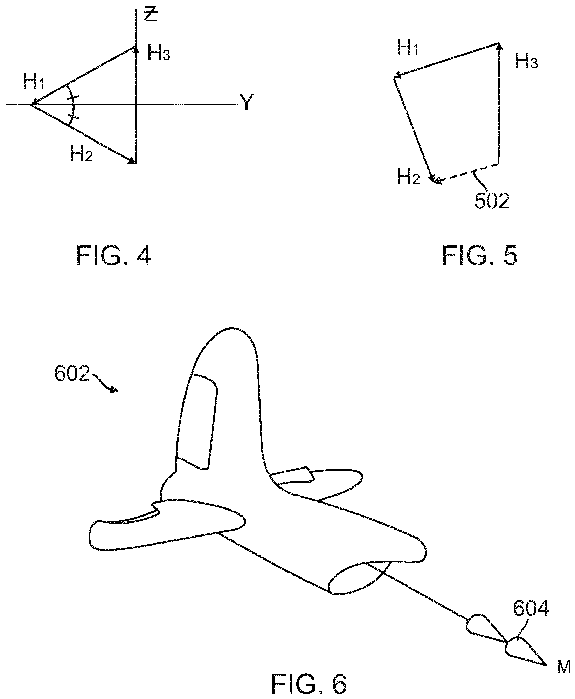

In one embodiment, the momentum vectors **H₁**, **H₂** and **H₃** may be oriented such that the net momentum for the CMGs **102** may be zero. Turning to **Figure 3**, an exemplary graph providing momentum vectors **H₁**, **H₂** and **H₃** of the CMGs **102** may be shown. **H₁** and **H₂** may have momentum vectors angled at thirty degrees that may cancel their Y-axis components along with the vertical component of **H₃** along the Z-axis. **Figure 4** may show how the momentum vectors **H₁**, **H₂** and **H₃** sum to a zero momentum state.

When saturated, the momentum is non-zero which may make the CMGs **102** lose effectiveness and control. When an array **102** is completely saturated, there is no amount of momentum that may be extracted in that particular direction (in the saturated direction). In one embodiment, "saturated" may describe when the momentum is above a threshold, but may be interchangeable with completely saturated. Utilization of CMG momentum in attitude control may include creating torque by rotating the individual CMG momentum vectors. That torque may be reacted by the host structure that in turn rotates. The relative rotation of the host structure may tend to balance the momentum in the CMG array **102.** In other words, the host platform may rotate with momentum equal to and opposite that of the CMG array **102.** In a condition where the host platform is at rest and the momentum of the CMG array **102** is non-zero, the residual may act to mitigate the amount of torque and momentum that may be used to control the angular attitude and rate of the host structure. Management of that momentum residual may be used to have effective attitude control so desaturation may be utilized. In rare cases, an operator or system may elect to create a bias momentum vector prior to a large momentum maneuver in order to extend the amount utilized in a maneuver, later to be desaturated towards a nominal, zero momentum state. The same methods may be utilized to desaturate a CMG array **102** and may be used to build up a momentum bias in anticipation of such a maneuver.

In **Figure 5****,** an exemplary graph providing residual momentum **502** may be shown. This residual momentum **502** may result from frictional losses, bias torque on the system or a number of other contributors. Ultimately, the residual momentum **502** may limit the amount of torque that may be extracted from the CMGs **102.**

The combination of vectors **H₁**, **H₂** and **H₃** shown in **Figure 5** has a non-zero residual momentum **502.** Residual momentum **502** in the CMG array **102** may be mitigated by applying an external torque in the direction equal to and opposite to the system. The torque may be provided through a process referred to as desaturation. The residual moment **502** of the CMGs **102** may be driven to a desired momentum state by generating a command equal to the difference between the desired state and the momentum residual times some gain. The *Law of Conservation of Angular Momentum* provides that the residual momentum **502** may be determined by summing the momentum of the platform and the momentum stored in the CMGs **102.** In a zero residual momentum state, the platform and CMG momentum may be equal and opposite. The goal of desaturization may be to drive the residual momentum **502** in the CMGs **102** to zero or within a threshold of zero. A bias momentum state may be created in anticipation of a specific maneuver. When a bias momentum state is generated, the amount of momentum transfer may be extended beyond that available by initiating the maneuver from a zero-bias state.

In an aircraft **602,** as provided in **Figure 6**, utilizing dedicated or existing aero-control surfaces may be used to produce the torque **604** counter to the residual momentum **502** on the CMGs **102** when saturated. The torque **604** may be in a vectored direction that reduces the stored angular momentum in the CMGs **102.** This airflow over the aero-control surface may produce positive torque **604** on the aircraft **602.** In one embodiment, airflow over the tail section may be used.

As depicted, the aero-control surfaces of the aircraft **602** may produce a roll axis torque **M 604** that may cancel a CMG residual momentum **502** in that direction. By utilizing existing sources of thrust from an aircraft **602**, desaturation of residual momentum **502** may no longer require dedicated surfaces or thruster mechanisms. The system may be used in other vehicles having CMGs **102** such as watercraft. A stream of air or liquid may be used.

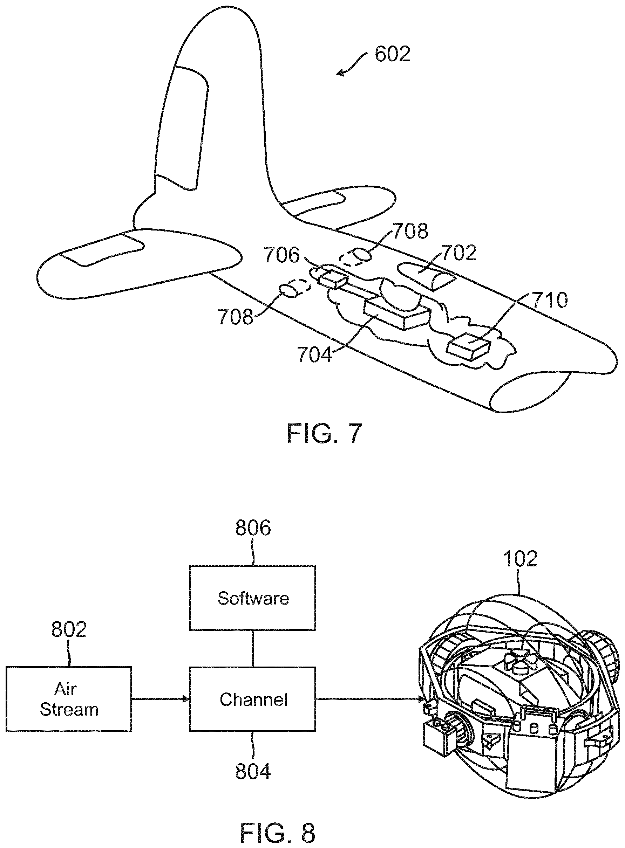

Turning to **Figure 7**, an illustrative system for desaturating the CMGs **102** through an airstream may be shown. The airstream may be taken from outside the aircraft **602.** In the shown embodiment, the airstream may be captured through an air intake **702.** More than one air intake **702** may exist on the aircraft **602.** The intake **702** may include a scoop that receives the airstream. The intake **702** may project from the outer surface of the aircraft **602**, which may be designed to utilize the dynamic pressure of the airstream to maintain a flow of air. The airstream may be taken in through an under carriage of the aircraft **602.**

The air intake **702** may re-direct air into a duct and manifold management system **704.** The aircraft **602** may have a number of valves **706** that may receive the airstream from the duct and manifold management system **704.** The airstream from the valves **706** may be directed in a manner that produces thrust via nozzles **708** strategically placed on the aircraft **602.** The thrust may then be used to generate torque **604** to desaturate the CMGs **102.**

While the system for desaturating the CMGs **102** is shown in the tail section of the aircraft **602**, the system may be placed in other locations. For example, the air intake **702** and duct and manifold system **704** may be provided in a middle portion of the aircraft **602** or at least a portion thereof. Portions of the desaturation system may be placed in the wings of the aircraft **602.**

In one embodiment, the thrust may be generated from another on-board source, for example, an auxiliary power unit (APU) within the aircraft **602.** Bleed thrust from an engine exhaust or a dedicated gas or liquid pressure generating device may also be used. The amount of desaturation torque **604** to be generated may be calculated, commanded and controlled via a processor **710** that utilizes sensor input from the aircraft **602** and CMG sensors.

In **Figure 8**, an exemplary block diagram providing generalized components for desaturating the CMGs **102** may be shown. The airstream **802** may be taken from a variety of sources. As shown above, the airstream may be taken from an external source. The airstream **802** may be received by a channel **804.** The channel **804** may include the air intake **702**, duct and manifold management system **704**, valves **706** and nozzles **708.**

As also shown, the airstream **802** may be taken from a propulsion device on the aircraft **602.** The bleed air may be taken from a compressor of the propulsion device. The bleed air may then be provided to the channel **804.** The channel **804**, in this embodiment, may include fewer or more parts than that described above. For example, the airstream **802** may be directed to the nozzles **708** within the channel **804** without using the air intake **702**, duct and manifold management system **704** and valves **706.** In one embodiment, a combination of both the outside vectored air and the bleed air may be used.

In each, the channel **804** may have one or more nozzles **708.** The nozzles **708** may be fixed. The fixed nozzles **708** may be selected to direct the airstream **802** to produce a desired torque **604** to desaturate the CMGs **102.** For example, the nozzles **708** may be selected based on angle and amount of torque **604** that may be generated therefrom. Alternatively, the nozzles **708** may be maneuverable. The nozzles may be moved to direct the airstream **802** and to produce the desired torque **604.**

By gimbaling the nozzles **708** within the channel **804** in a coordinated set of directions, torque **604** may be produced via a steering law or modulating the thrust from fixed nozzles **708** via a selection control law. Similarly, the torque **604** may be generated via commanding aero-control surfaces to generate a torque in a direction opposite to that of the residual **502** and for a duration to produce an equivalent momentum thereby reducing the residual **502** to a near or zero residual state.

In both the fixed and maneuverable nozzles **708**, software **806** may be used to vector the airstream **802.** The software **806** may also be used for detecting saturation within the CMGs **102.** Sensors may be attached to the CMGs **102** where saturated angular momentum within it may be detected. Saturation may be calculated based on the known orientation of the gimbal axis **106** of the CMGs **102.** In addition to a gimbal angle, an estimation of the individual CMG momentum vectors which may be determined by knowledge of the inertial mass about its spin axis and a sensor that determines the rotational speed may be used.

The appropriate amount of thrust may be determined within the algorithm and the nozzles **708** therein may be used to generate enough torque **604** to counteract the saturation within the CMGs **102.** Through the channel **804**, torque **604** may be provided to deplete the residual momentum through a combination of aero-control surfaces.

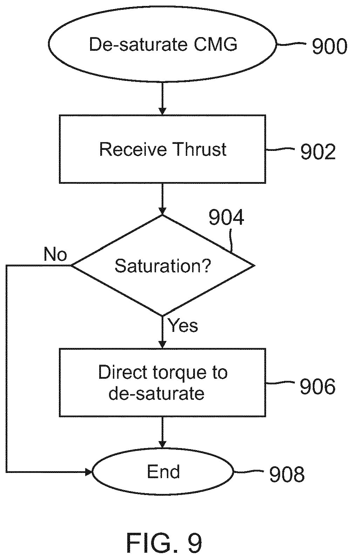

Referring to **Figure 9**, a flow chart providing illustrative processes for desaturating the CMGs **102** may be shown. The processes for desaturation the CMGs **102** may begin at **block 900.** At **block 902**, the system may receive thrust. The thrust, as described above, may come from a variety of sources including outside the aircraft **602** through an air intake **702.** Alternatively, the thrust may be bleed air received from a propulsion device.

Saturation of the CMGs **102** may be detected at **decision block 904.** When saturated, or above the threshold where desaturation is desired, the useful torque and momentum transfer provided by the CMG **102** may be limited. The saturation may be detected by an algorithm or other control circuitry within the array **102** or other control processor. The momentum state may be calculated with an estimation of the stored angular momentum in the individual CMGs along with knowledge of their relative angular orientation through vector math/algorithms. When no saturation has been detected, the processes may end at **block 908.** Otherwise, the system may direct torque **604** to desaturate the CMGs **102** at **block 906.** The amount of torque **604** to desaturate the CMGs **102** may be computed by the algorithm. Furthermore, nozzles **708** may be either fixed or maneuverable by the algorithm to redirect the airflow. The processes may end at **block 908.**

In the text and the figures, a method is disclosed for adjusting a control moment gyroscope array 102 including: receiving a stream; and directing the stream to adjust momentum in the control moment gyroscope array 102. In one variant, the method includes detecting saturation of the control moment gyroscope array 102. In another variant, the method includes wherein receiving the stream comprises extracting bleed air from a propulsion device. In one instance, the method includes wherein extracting the bleed air from the propulsion device comprises obtaining the bleed air from a compressor of the propulsion device. In one example, the method includes wherein directing the stream to reduce the momentum in the control moment gyroscope 102A, 102B, 102C includes maneuvering at least one nozzle 708 in a coordinated direction to produce a desired torque 604.

In one alternative, the method includes wherein directing the stream to reduce the momentum in the control moment gyroscope 102A, 102B, 102C includes selecting at least one fixed nozzle 708 to produce a desired torque 604. In another alternative, the method includes wherein directing the stream to adjust the momentum in the control moment gyroscope (102A, 102B, 102C) comprises driving momentum in the control moment gyroscope (102A, 102B, 102C) to a desired state or threshold for generating a bias in large momentum maneuvers.

In one aspect, a control moment gyroscope array 102 is disclosed including: a plurality of control moment gyroscopes (CMGs) 102A, 102B, 102C having saturated angular momentum; and
a channel receiving airflow for adjusting the angular momentum residual. In one variant, the control moment gyroscope includes wherein the channel includes an air intake 702, duct and manifold system 704 and at least one valve and nozzle 708. In one variant, the control moment gyroscope includes wherein the at least one nozzle 708 is maneuverable. In one variant, the control moment gyroscope includes wherein the at least one nozzle 708 is fixed. In another variant, the control moment gyroscope is disclosed including software for determining an amount of the airflow for removing the saturated angular momentum. In still another variant, the control moment gyroscope includes software for determining whether a rotor 102 is saturated. In yet another variant, the control moment gyroscope of Claim 8, comprising a propulsion device for providing the airflow.

In another aspect, a system is disclosed including:
a control moment gyroscope array 102; and at least one channel vectoring thrust to the control moment gyroscope array 102 for adjusting angular momentum. In one variant, according to Claim 14, the CMG array comprises a propulsion system for providing the thrust. In one variant, the system includes an air intake (702) for providing the thrust. In one variant, the system includes wherein the thrust comprises bleed air and other vectored air. In another variant, the system includes wherein adjusting the angular momentum comprises desaturating or adjusting to a desired momentum state. In yet another variant, the system includes aero-control surfaces combined with the thrust for adjusting the angular momentum.

The features presented herein may be extended to other technologies. For example, the system may be converted such that reaction wheel arrays may be desaturated. Other angular momentum storage systems that combine various momentum devices may also be desaturated using those features presented above.

The data structures and code within the software **806**, in which the present disclosure may be implemented, may typically be stored on a non-transitory computer-readable storage. The storage may be any device or medium that may store code and/or data for use by a processor. The non-transitory computer-readable storage medium includes, but is not limited to, volatile memory, non-volatile memory, magnetic and optical storage devices such as disk drives, magnetic tape, CDs (compact discs), DVDs (digital versatile discs or digital video discs), or other media capable of storing code and/or data now known or later developed.

The methods and processes described in the disclosure may be embodied as code and/or data, which may be stored in a non-transitory computer-readable storage medium as described above. When a computer system reads and executes the code and/or data stored on the non-transitory computer-readable storage medium, the computer system performs the methods and processes embodied as data structures and code and stored within the non-transitory computer-readable storage medium. Furthermore, the methods and processes described may be included in hardware modules. For example, the hardware modules may include, but are not limited to, application-specific integrated circuit (ASIC) chips, field-programmable gate arrays (FPGAs), and other programmable-logic devices now known or later developed. When the hardware modules are activated, the hardware modules perform the methods and processes included within the hardware modules.

The technology described herein may be implemented as logical operations and/or modules. The logical operations may be implemented as a sequence of processor-implemented executed steps and as interconnected machine or circuit modules. Likewise, the descriptions of various component modules may be provided in terms of operations executed or effected by the modules. The resulting implementation is a matter of choice, dependent on the performance requirements of the underlying system implementing the described technology. Accordingly, the logical operations making up the embodiment of the technology described herein are referred to variously as operations, steps, objects, or modules. It should be understood that logical operations may be performed in any order, unless explicitly claimed otherwise or a specific order is inherently necessitated by the claim language.

While embodiments of the disclosure have been described in terms of various specific embodiments, those skilled in the art will recognize that the embodiments of the disclosure may be practiced with modifications within the scope of the claims.

## Claims

1. A method for adjusting a control moment gyroscope array (102) on board a spacecraft, an aircraft or watercraft comprising:
receiving a stream of air or liquid; and
directing the stream along at least one channel (804) such that the thrust is vectored to the control moment gyroscope array to adjust momentum in the control moment gyroscope array (102).

2. The method of Claim 1, comprising detecting saturation of the control moment gyroscope array (102).

3. The method of any of Claims 1 or 2, wherein receiving the stream comprises extracting bleed air from a propulsion device.

4. The method of Claim 3, wherein extracting the bleed air from the propulsion device comprises obtaining the bleed air from a compressor of the propulsion device.

5. The method of any of Claims 1-4, wherein directing the stream to reduce the momentum in the control moment gyroscope (102A, 102B, 102C) comprises maneuvering at least one nozzle (708) in a coordinated direction to produce a desired torque (604).

6. The method of any of Claims 1-4, wherein directing the stream to reduce the momentum in the control moment gyroscope (102A, 102B, 102C) comprises selecting at least one fixed nozzle (708) to produce a desired torque (604).

7. The method of any of Claims 1-4, wherein directing the stream to adjust the momentum in the control moment gyroscope (102A, 102B, 102C) comprises driving momentum in the control moment gyroscope (102A, 102B, 102C) to a desired state or threshold for generating a bias in large momentum maneuvers.

8. A control moment gyroscope array (102) comprising:
a plurality of control moment gyroscopes (CMGs) (102A, 102B, 102C) having saturated angular momentum; and
a channel (804) configured to receive a stream of air or liquid and to direct the stream of air or liquid such that thrust is vectored to the gyroscope array to adjust the residual angular momentum of the control moment gyroscopes.

9. The control moment gyroscope array of Claim 8, wherein the channel comprises an air intake (702), duct and manifold system (704) and at least one valve and nozzle (708).

10. The control moment gyroscope array of Claim 9, wherein the at least one nozzle (708) is maneuverable.

11. The control moment gyroscope array of Claim 9, wherein the at least one nozzle (708) is fixed.

12. The control moment gyroscope array of any of Claims 8-11, comprising software for determining an amount of the stream of air or liquid for removing the saturated angular momentum.

13. The control moment gyroscope array of any of Claims 8-11, comprising software for determining whether a rotor (102) is saturated.

14. The control moment gyroscope array of any of Claims 8-13, comprising a propulsion device for providing the stream of air or liquid.

15. The control moment gyroscope array as recited in any of the Claims 8-14 adjusted by the method as recited in any of the Claims 1-7.

## Patentansprüche

1. Verfahren zum Einstellen einer gefesselten Kreisel- bzw. Control Moment Gyroscope -Anordnung (102) an Bord eines Raumfahrzeugs, eines Luftfahrzeugs oder eines Wasserfahrzeugs, das aufweist:
Empfangen eines Stroms von Luft oder Flüssigkeit; und
Richten des Stroms entlang wenigstens eines Kanals (804) derart, dass der Schub auf die gefesselte Kreisel-Anordnung übertragen wird, um das Momentum in der gefesselten Kreisel-Anordnung (102) einzustellen.

2. Verfahren nach Anspruch 1, das das Feststellen der Sättigung der gefesselten Kreisel- bzw. Control Moment Gyroscope -Anordnung (102) aufweist.

3. Verfahren nach einem der Ansprüche 1 oder 2, wobei das Empfangen des Stroms das Extrahieren von Zapfluft aus einer Antriebsvorrichtung aufweist.

4. Verfahren nach Anspruch 3, wobei das Extrahieren der Zapfluft aus der Antriebsvorrichtung das Erhalten der Zapfluft von einem Kompressor der Antriebsvorrichtung aufweist.

5. Verfahren nach einem der Ansprüche 1-4, wobei das Richten des Stroms, um das Momentum in dem gefesselten Kreisel- bzw. Control Moment Gyroscope (102A, 102B, 102C) zu reduzieren, das Manövrieren wenigstens einer Düse (708) in einer koordinierten Richtung aufweist, um ein gewünschtes Drehmoment (604) zu erzeugen.

6. Verfahren nach einem der Ansprüche 1-4, wobei das Richten des Stroms, um das Momentum in dem gefesselten Kreisel- bzw. Control Moment Gyroscope (102A, 102B, 102C) zu reduzieren, das Auswählen wenigstens einer festen Düse (708) aufweist, um ein gewünschtes Drehmoment (604) zu erzeugen.

7. Verfahren nach einem der Ansprüche 1-4, wobei das Richten des Stroms, um das Momentum in dem gefesselten Kreisel- bzw. Control Moment Gyroscope (102A, 102B, 102C) einzustellen, das Treiben des Momentums in dem gefesselten Kreisel (102A, 102B, 102C) in einen gewünschten Zustand oder Schwellenwert zum Erzeugen einer Vorspannung bei großen Momentummanövem aufweist.

8. Gefesselte Kreisel- bzw. Control Moment Gyroscope -Anordnung (102), die aufweist:
eine Vielzahl von gefesselten Kreisel bzw. Control Moment Gyroscopes (CMGs) (102A, 102B, 102C), die einen gesättigten Drehimpuls haben; und
einen Kanal (804), der dazu konfiguriert ist, einen Strom von Luft oder Flüssigkeit zu empfangen und den Strom von Luft oder Flüssigkeit derart zu richten, dass Schub an die Kreiselanordnung übertragen wird, um das Restdrehimpuls der gefesselten Kreisel einzustellen.

9. Gefesselte Kreisel- bzw. Control Moment Gyroscope -Anordnung nach Anspruch 8, wobei der Kanal einen Lufteinlass (702), ein Leitungs- und Verteiler-System (704) und wenigstens ein Ventil und Düse (708) aufweist.

10. Gefesselte Kreisel- bzw. Control Moment Gyroscope -Anordnung nach Anspruch 9, wobei die wenigstens eine Düse (708) manövrierbar ist.

11. Gefesselte Kreisel- bzw. Control Moment Gyroscope -Anordnung nach Anspruch 9, wobei die wenigstens eine Düse (708) fest ist.

12. Gefesselte Kreisel- bzw. Control Moment Gyroscope -Anordnung nach einem der Ansprüche 8-11, die Software zum Ermitteln eines Betrags des Stroms von Luft oder Flüssigkeit zum Entfernen des gesättigten Drehimpulses aufweist.

13. Gefesselte Kreisel- bzw. Control Moment Gyroscope -Anordnung nach einem der Ansprüche 8-11, die Software zu Ermitteln aufweist, ob ein Rotor (102) gesättigt ist.

14. Gefesselte Kreisel- bzw. Control Moment Gyroscope -Anordnung nach einem der Ansprüche 8-13, die eine Antriebsvorrichtung zum Bereitstellen des Stroms von Luft oder Flüssigkeit aufweist.

15. Gefesselte Kreisel- bzw. Control Moment Gyroscope -Anordnung nach einem der Ansprüche 8-14, die durch das Verfahren nach einem der Ansprüche 1-7 eingestellt wird.

## Revendications

1. Procédé pour ajuster un ensemble d'actionneurs gyroscopiques (102) à bord d'un vaisseau spatial, d'un avion ou d'une embarcation, comprenant de :
recevoir un flux d'air ou de liquide ; et
orienter le flux le long d'au moins un canal (804) de façon que la poussée soit guidée sur l'ensemble d'actionneurs gyroscopiques pour ajuster l'inertie dans l'ensemble d'actionneurs gyroscopiques (102).

2. Procédé selon la revendication 1, comprenant de détecter une saturation de l'ensemble d'actionneurs gyroscopiques (102).

3. Procédé selon la revendication 1 ou 2, dans lequel recevoir le flux comprend d'extraire de l'air de purge d'un appareil de propulsion.

4. Procédé selon la revendication 3, dans lequel extraire de l'air de purge de l'appareil de propulsion comprend d'obtenir l'air de purge d'un compresseur de l'appareil de propulsion.

5. Procédé selon l'une quelconque des revendications 1 à 4, dans lequel orienter le flux pour réduire le moment dans l'actionneur gyroscopique (102A, 102B, 102C) comprend de manoeuvrer au moins une buse (708) dans une direction coordonnée pour produire un couple désiré (604) .

6. Procédé selon l'une quelconque des revendications 1 à 4, dans lequel orienter le flux pour réduire le moment dans l'actionneur gyroscopique (102A, 102B, 102C) comprend de sélectionner au moins une buse fixe (708) pour produire un couple désiré (604).

7. Procédé selon l'une quelconque des revendications 1 à 4, dans lequel orienter le flux pour réduire l'impulsion dans l'actionneur gyroscopique (102A, 102B, 102C) comprend de commander le moment dans l'actionneur gyroscopique (102A, 102B, 102C) jusqu'à un état ou un seuil désiré pour générer une sollicitation dans des manoeuvres à forte impulsion.

8. Ensemble d'actionneurs gyroscopiques (102) comprenant :
plusieurs actionneurs gyroscopiques (CMG) (102A, 102B, 102C) ayant un moment cinétique saturé ; et
un canal (804) configuré pour recevoir un flux d'air ou de liquide et pour diriger le flux d'air ou de liquide de façon que cette poussée soit orientée vers l'ensemble d'actionneurs gyroscopiques pour ajuster le moment cinétique résiduel des actionneurs gyroscopiques.

9. Ensemble d'actionneurs gyroscopiques selon la revendication 8, dans lequel le canal comprend une prise d'air (702), un conduit et un système de manifold (704) et au moins une soupape avec buse (708) .

10. Ensemble d'actionneurs gyroscopiques selon la revendication 9, dans lequel l'au moins une buse (708) est manoeuvrable.

11. Ensemble d'actionneurs gyroscopiques selon la revendication 9, dans lequel l'au moins une buse (708) est fixe.

12. Ensemble d'actionneurs gyroscopiques selon l'une quelconque des revendications 8 à 11, comprenant un logiciel pour déterminer une quantité de flux d'air ou de liquide pour éliminer la saturation du moment cinétique.

13. Ensemble d'actionneurs gyroscopiques selon l'une quelconque des revendications 8 à 11, comprenant un logiciel pour déterminer si un rotor (102) est saturé.

14. Ensemble d'actionneurs gyroscopiques selon l'une quelconque des revendications 8 à 13, comprenant un appareil de propulsion destiné à fournir le flux d'air ou de liquide.

15. Ensemble d'actionneurs gyroscopiques selon l'une quelconque des revendications 8 à 14, aajusté par le procédé selon l'une quelconque des revendications 1 à 7.
